# EUROPÄISCHE PATENTSCHRIFT

(11) **EP 0 477 484 B1**
(45) Veröffentlichungstag und Bekanntmachung des Hinweises auf die Patenterteilung: **12.10.1994**
(21) Anmeldenummer: 91110915.5
(22) Anmeldetag: 02.07.1991
(51) Int. Cl.: H02G 3/04

(54) **Kabelführungsrohrbündel und Verfahren zur Herstellung eines Rohraggregates für ein Kabelführungsrohrbündel**
Cable tubings bundle and manufacturing method of a tubing assembly for a cable tubings bundle
Faisceau de conduits tubulaires pour câbles et méthode de fabrication d'un ensemble de tubes pour faisceau de conduits tubulaires pour câbles

(30) Priorität: 24.09.1990 DE 4030217; 08.12.1990 DE 4039275
(43) Veröffentlichungstag der Anmeldung: 01.04.1992
(73) Patentinhaber: Dipl.-Ing. Dr. Ernst Vogelsang GmbH & Co. KG, D-45699 Herten (DE)
(72) Erfinder: Vogelsang, Horst, W-4352 Herten (DE)
(74) Vertreter: Andrejewski, Walter

(56) Entgegenhaltungen:
- EP-A- 0 231 504
- GB-A- 2 183 000

## Beschreibung

Die Erfindung betrifft ein Kabelführungsrohrbündel aus gleichen Kunststoffrohren, die mit Hilfe von angeformten und verformbaren länglaufenden Verbindungsstegen vereinigt und zu einem ebenen Rohraggregat entbündelbar sind. Die Erfindung betrifft fernerhin ein Verfahren zur Herstellung eines Rohraggregates für ein solches Kabelführungsrohrbündel. - Der Ausdruck Kabelführungsrohrbündel besagt, daß in die einzelnen Kunststoffrohre Kabel eingezogen werden. Andererseits können die Kabelführungsrohrbündel ihrerseits in ein Schutzrohr eingezogen werden. Kabelführungsrohrbündel sind aus einem ebenen Rohraggregat, bei dem die Einzelrohre durch die Verbindungsstege vereinigt sind, zusammengelegt. Die ebenen Rohraggregate werden im Wege des Strangpressens mittels Extruder aus thermoplastischem Kunststoff geformt und können ohne Schwierigkeiten fabrikmäßig aufgetrommelt, im aufgetrommelten Zustand tansportiert und bei der Verlegung der Kabelführungsrohrbündel wieder abgetrommelt und zum Kabelführungsrohrbündel zusammengefaßt werden. Es versteht sich, daß die Zusammenfassung zum Kabelführungsrohrbündel der Fixierung bedarf. Das geschieht durch Umreifung oder durch besondere, angeformte Bauteile, die an den im Rohraggregat außenseitig verlaufenden Kunststoffrohren angeordnet sind, welche sich im Kabelführungsrohrbündel umfangsmäßig stoßen. Die Gestaltung insgesamt und die Fixierung geschehen so, daß das Kabelführungsrohrbündel gerade und/oder bogenförmig verlegt werden kann. Der Werkstoff der Rohraggregate ist unzureichend elastisch verformbar eingestellt, um das beschriebene Auftrommeln und Abtrommeln, aber unter Verformung der Verbindungsstege auch das Zusammenlegen der Einzelrohre des Rohraggregates zum Kabelführungsrohr zuzulassen.

In der Praxis sind Kabelführungsrohre bekannt, bei denen die einzelnen Kunststoffrohre runden Außenquerschnitt und entsprechend auch runden Innenquerschnitt aufweisen. Diese Gestaltung erlaubt zwar eine einfache Fertigung sowie ein unproblematisches Auftrommeln und Abtrommeln, nachteilig ist jedoch, daß die einzelnen Kunststoffrohre im Kabelführungsrohrbündel sich nicht komplementär ergänzen und nur mit Linienkontakt aneinanderliegen. Das bedeutet, daß die einzelnen Kunststoffrohre in dem Kabelführungsrohrbündel, querschnittsmäßig betrachtet, nicht so zusammenliegen, wie die einzelnen Quadrate und Rechtecke in einem gekastelten Papier bzw. die einzelnen Waben in der Vielfachwabe eines Bienenstockes. Es existieren folglich in dem Kabelführungsrohrbündel zwischen den einzelnen Kunststoffrohren sowie zwischen den Kunststoffrohren und den Verbindungsstegen Spalte und mehr oder weniger große Freiräume. Diese Freiräume erlauben zwar ein bogenförmiges Verlegen des Kabelführungsrohrbündels auch mit verhältnismäßig kleinem Krümmungsradius, wird jedoch ein solches Kabelführungsrohrbündel unmittelbar, d. h. ohne ein umgebendes Schutzrohr, im Erdreich verlegt, so kann Wasser in die Spalte und die Freiräume eindringen. Dieses stört, weil das Kabelführungsrohrbündel dadurch gleichsam zu einem Drainagerohr wird und das eingedrungene Wasser in vorgeschaltete oder nachgeschaltete Kabelschächte einlaufen kann. Auch kann umgebendes Erdreich in die Spalte und Freiräume eindringen und die Beweglichkeit des verlegten Kabelführungsrohrbündels in Erdsenkungsgebieten beeinträchtigen.

In jüngerer Zeit ist vorgeschlagen worden (DE 36 03 849), ein Kabelführungsrohrbündel aus einer Mehrzahl von Kunststoffrohren aufzubauen, die einen abgewandelt dreieckigen Außenquerschnitt aufweisen. Die Abwandlung der Dreieckform besteht aus starken Verrundungen der Ecken. Bei dieser Ausführungsform ist nachteilig, daß im Innern der einzelnen, im Querschnitt abgewandelt dreieckigen Kunststoffrohre im Bereich der Ecken große Raumbereiche als Toträume freibleiben, in die Kabel praktisch nicht einführbar sind. Diese Ausführungsform von Kabelführungsrohrbündeln ist daher werkstoffaufwendig. Im übrigen sind die Rohraggregate, aus denen solche Kabelführungsrohrbündel zusammengelegt werden, mit einem Flächenträgheitsmoment ausgerüstet, welches dem Auftrommeln der Rohraggregate großen Widerstand entgegensetzt und unter Umständen sogar zu unerwünschten Querschnittsverformungen des dreieckförmigen Querschnittes der einzelnen Kunststoffrohre beim Auftrommeln führt. Wird ein solches Kabelführungsrohrbündel verlegt und erfährt es bei der Verlegung bogenförmige Führungen oder nach der Verlegung in Erdsenkungsgebieten Verformungen, so kommt es zu Aufklaffungen zwischen den einzelnen Kunststoffrohren im Kabelführungsrohrbündel. Wegen der Aufklaffungen kann auch bei diesen Kabelführungsrohrbündeln im verlegten Zustand Wasser eindringen und die oben beschriebenen Nachteile auslösen.

Das Kabelführungsrohrbündel, von dem die Erfindung ausgeht (DE 39 09 813, entspricht der EP-A-0 388 797, am 27.09.90 veröffentlicht, gilt als Stand der Technik gemäß Art. 54(3) EPÜ), ist als Rohraggregat ohne Schwierigkeiten auftrommelbar und abtrommelbar. Störende Freiräume im Kabelführungsrohrbündel müssen nicht in Kauf genommen werden. Dazu weisen die Kunststoffrohre einen vieleckigen Außenquerschnitt mit mehr als drei Ecken auf, wobei die einzelnen Kunststoffrohre im Kabelführungsrohraggregat sich komplementär ergänzen. Die Kunststoffrohre sind durch angeformte verformbare Verbindungsstege gleichsam linear vereinigt sowie dadurch zu einem ebenen Rohraggregat entbündelbar. Vorzugsweise besitzen bei dieser Ausführungsform die einzelnen Kunststoffrohre sechseckigen Querschnitt. Diese Kabelführungsrohrbündel genügen als ebenes Rohraggregat und auch im erdverlegten Zustand allen Anforderungen. Zur Verwendung in Erdsenkungsgebieten ist die Bündelstabilität jedoch verbesserungsfähig.

Der Erfindung liegt die Aufgabe zugrunde, ein Kabelführungsrohrbündel so zu gestalten, daß es im erdverlegten Zustand, auch bei der Verlegung in Erdsenkungsgebieten, seine Bündelstabilität beibehält, so daß auch bei Verformungen die Berührungsflächen aneinanderliegen und sich stabilitätsmäßig sicher gegeneinander abstützen. Es versteht sich, daß im übrigen bei der Herstellung und beim Verlegen die vorstehend beschriebenen Eigenschaften beibehalten werden sollen und müssen.

Zur Lösung dieser Aufgabe weist das erfindungsgemäße Kabelführungsrohrbündel die Kombination der folgenden Merkmale auf :
a) das Kabelführungsrohrbündel besteht aus drei Kunststoffrohren,
b) die Kunststoffrohre besitzen einen Außenquerschnitt, der zumindest bereichsweise einem regelmäßigen Sechseck angehört,
c) die in bezug auf den Außenquerschnitt dem regelmäßigen Sechseck angehörende Außenflächen der Kunststoffrohre bilden die Kontaktflächen der Kunststoffrohre im Kabelführungsrohrbündel,
d) die Kontaktflächen der Kunststoffrohre liegen im Kabelführungsrohrbündel flächig mit schmalen Kontaktspalten aneinander und bilden einen bis auf die Kontaktspalte massiven Rohrbündelkern,
e) die Verbindungsstege sind im Kabelführungsrohrbündel Abdichtungslamellen, welche die Kontaktspalte und daran nach außen anschließende Verformungsfreiräume überspannen.

Die Erfindung geht von der Erkenntnis aus, daß die Kunststoffrohre eines Rohraggregates aus drei Kunststoffrohren bei Verwirklichung der beschriebenen Kombination gleichsam statisch bestimmt sich zu einem Kabelführungsrohrbündel zusammenlegen lassen, in dem folglich die Kunststoffrohre stabilitätsmäßig sicher gegeneinander abgestützt sind. Nichtsdestoweniger können die erfindungsgemäßen Kabelführungsrohrbündel bogenförmig verlegt werden und behalten sie auch ihre Bündelstabilität, wenn eine Verlegung in Erdsenkungsgebieten erfolgt und spätere Erdsenkungen in Kauf genommen werden müssen. Die Rohraggregate des Kabelführungsrohrbündels lassen sich einfach herstellen, das Kabelführungsrohrbündel kann auf einfache Weise zusammengelegt werden.

Im einzelnen bestehen mehrere Möglichkeiten der weiteren Ausbildung und Gestaltung. Varianten, die ohne Einschränkung die der Erfindung zugrundeliegende Aufgabe lösen, sind z. B. eine Ausführungsform, bei der die Kunststoffrohre einen runden Innenquerschnitt aufweisen. Im Rahmen der Erfindung liegt es jedoch auch, den Innenquerschnitt regelmäßig sechseckig zu gestalten. Allen Anforderungen genügt fernerhin eine Ausführungsform, die dadurch gekennzeichnet ist, daß die Kunststoffrohre einen Außenquerschnitt besitzen, der vollständig einem regelmäßigen Sechseck angehört.

Eine bevorzugte Ausführungsform der Erfindung, bei der sich das Rohraggregat besonders leicht zu einem Kabelführungsrohrbündel zusammenlegen läßt und bei der das Kabelführungsrohrbündel auch leicht in ein Schutzrohr eingezogen werden kann, ist dadurch gekennzeichnet, daß die Kunststoffrohre einen Außenquerschnitt besitzen, bei dem an die den sechseckigen Querschnitt angehörenden, Kontaktflächen bildenden Außenquerschnittsteile ein Bereich mit kreisbogenförmigem Außenquerschnitt unmittelbar oder mittelbar anschließt. Diese Ausführungsform erlaubt auch eine besonders einfache und definierte Fertigung des zugrundeliegenden Rohraggregates und eine hohe Genauigkeit bei der Kalibrierung. Auch bei dieser Ausführungsform sind mehrere Varianten möglich. Eine ist dadurch gekennzeichnet, daß der Bereich mit kreisbogenförmigem Außenquerschnitt an Ecken der einem regelmäßigen Sechseck angehörenden Außenquerschnittsteile unmittelbar anschließt. Eine andere Ausführungsform, die sich in bezug auf die beschriebenen Vorteile, aber auch in bezug auf die Kalibrierung besonders bewährt hat, ist dadurch gekennzeichnet, daß der Bereich mit kreisbogenförmigem Außenquerschnitt halbkreisförmig ausgeführt und an Außenquerschnittsbereiche angeschlossen ist, die ein halbes regelmäßiges Sechseck bilden.

Die Verbindungsstege der Kunststoffrohre sind zweckmäßigerweise mit Abstand von den Ecken des einem regelmäßigen Sechseck angehörenden Außenquerschnittsteils an die Außenoberflächen der Kunststoffrohre angeformt. Das geschieht vorzugsweise im Bereich der Mitte dieser Außenoberflächen, bezogen auf die Ecken des regelmäßigen Sechsecks. Eine bevorzugte Ausführungsform ist in diesem Zusammenhang dadurch gekennzeichnet, daß die Verbindungsstege in dem Außenquerschnittsteil an die Außenoberfläche der Kunststoffrohre angeformt sind, indem der Bereich mit halbkreisförmigem Außenquerschnittsteil an die Außenquerschnittsbereiche angeschlossen ist, die einem halben regelmäßigen Sechseck angehören.

Es versteht sich, daß es sich empfiehlt, bei dem erfindungsgemäßen Kabelführungsrohrbündel die Bereiche ausreichend abzudichten, die nicht von einem Verbindungssteg abgedeckt sind. Dazu lehrt die Erfindung, daß der von Verbindungsstegen und damit Abdichtungslamellen freie Bereich zwischen den Kunststoffrohren durch eine Abdecklamelle aus Kunststoff abgedeckt ist. Diese kann grundsätzlich nachträglich aufgeschweißt sein. Eine bevorzugte Ausführungsform der Erfindung ist jedoch dadurch gekennzeichnet, daß die Abdecklamelle einseitig entsprechend einem Verbindungssteg an eines der Kunststoffrohre angeformt und mit dem gegenüberliegenden nachträglich verschweißt ist. Die Schweißverbindungen bei den zuletzt beschriebenen Ausführungsformen können als durchlaufende Schweißnähte, aber auch als Punktschweißnähte ausgeführt sein. Es ist lediglich Vorsorge zu treffen, daß eine ausreichende Abdeckung so erreicht wird, daß in die Freiräume des erfindungsgemäßen Kabelführungsrohrbündels in störendem Maße Substanzen nicht eintreten.

Gegenstand der Erfindung ist auch ein Verfahren zur Herstellung eines Rohraggregates für ein Kabelführungsrohrbündel, wie es vorstehend beschrieben worden ist. Bei diesem Verfahren wird zunächst im Wege des Extrudierens das Rohraggregat mit den Verbindungsstegen geformt und werden aus der Extrusionswärme heraus in einem Kalibrierwerkzeug die Außenflächen des Querschnittes kalibriert sowie bei der Kalibrierung die späteren Kontaktflächen unter Berücksichtigung der Abkühlungsschrumpfung als Paßflächen für das Kabelführungsrohrbündel dimensioniert. Ohne weiteres besteht die Möglichkeit, an eines der im Rohraggregat außenliegenden Kunststoffrohre beim Extrudieren auch die Abdeckungslamelle anzuformen. Insbesondere kann eine Abdeckungslamelle angeformt werden, die breiter ist als die Verbindungsstege und über die später anzubringende Schweißnaht vorsteht. Das Extrudieren der Ausführungsform mit Abdeckungslamelle ist besonders einfach, wenn die Abdeckungslamelle dicker ausgeführt wird als die Verbindungsstege. Eine bevorzugte Ausführungsform der Erfindung ist in diesem Zusammenhang dadurch gekennzeichnet, daß die Abdeckungslamelle mit einem stabilisierenden Randsteg als Extrusions- und Verschweißhilfe versehen wird. Der Randsteg an der Abdeckungslamelle kann nach dem Verschweißen entfernt werden. Der Randsteg kann beispielsweise einen runden Querschnitt aufweisen und erleichtert erheblich das Extrudieren und Kalibrieren.

Im folgenden wird die Erfindung anhand einer lediglich ein Ausführungsbeispiel darstellenden Zeichnung ausführlicher erläutert. Es zeigen in schematischer Darstellung
- Fig. 1: einen Querschnitt durch ein Rohraggregat, welches zu einem erfindungsgemäßen Kabelführungsrohrbündel zusammenlegbar ist,
- Fig. 2: das Kabelführungsrohrbündel aus dem ebenen Rohraggregat des Gegenstandes der Fig. 1 im Querschnitt,
- Fig. 3: eine andere Ausführungsform des Gegenstandes der Fig. 2,
- Fig. 4: entsprechend der Fig. 1 einen Querschnitt durch ein Rohraggregat, welches zu einem umfangsmäßig anders gestalteten Kabelführungsrohrbündel zusammenlegbar ist, und
- Fig. 5: das Kabelführungsrohrbündel aus dem ebenen Rohraggregat des Gegenstandes der Fig. 4.

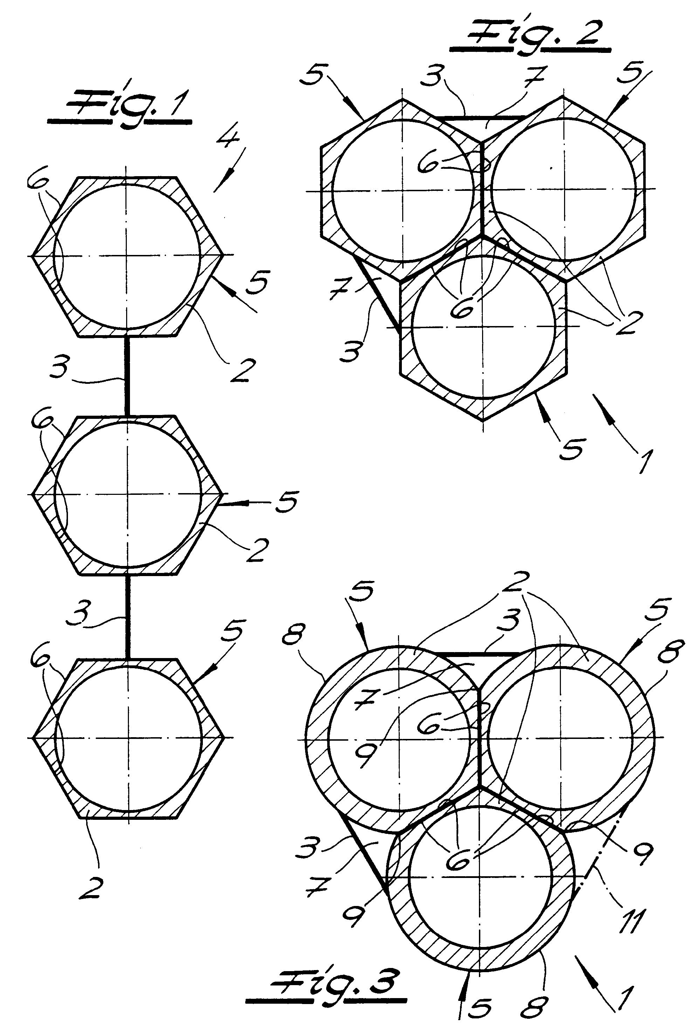

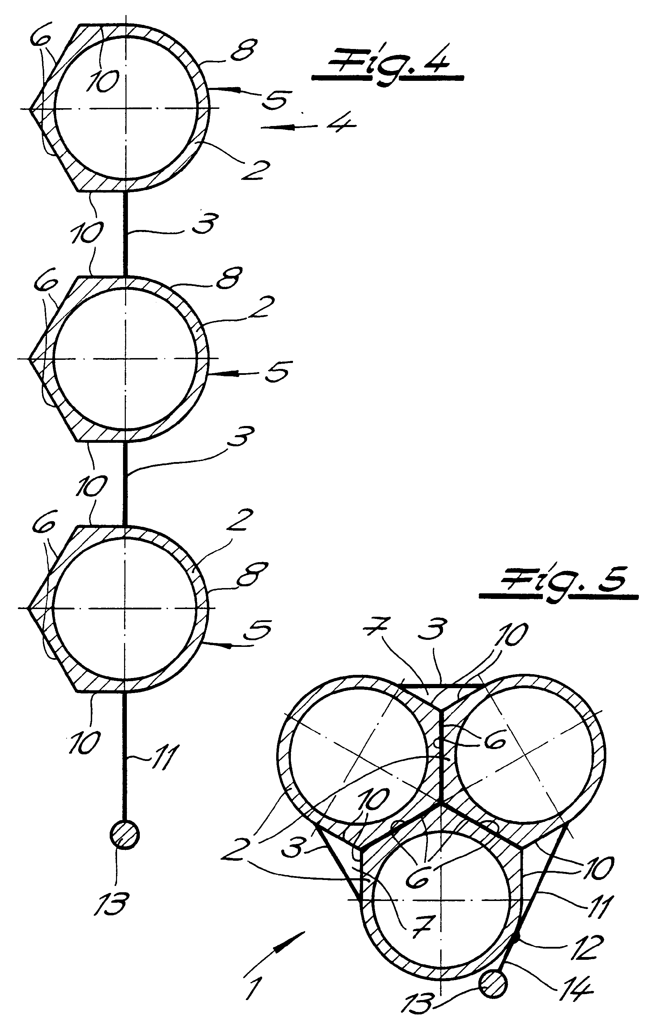

Die in den Fig. 2, 3 und 5 im Querschnitt dargestellten Kabelführungsrohrbündel 1 bestehen aus gleichen Kunststoffrohren 2, die mit Hilfe von angeformten und verformbaren längslaufenden Verbindungsstegen 3 vereinigt und zu einem ebenen Rohraggregat 4 entbündelbar sind. Solche Rohraggregate 4 sind in den Fig. 1 und 4 dargestellt worden. Es versteht sich, daß sich umgekehrt formulieren läßt, daß die dargestellten Kabelführungsrohrbündel 1 aus solchen Rohraggregaten 4 bündelbar sind.

Erfindungsgemäß besteht ein Kabelführungsrohrbündel 1 aus drei Kunststoffrohren 2. Die Kunststoffrohre 2 besitzen einen Außenquerschnitt 5, der zumindest bereichsweise einem regelmäßigen Sechseck angehört. Die in bezug auf den Außenquerschnitt dem regelmäßigen Sechseck angehörende Außenflächen der Kunststoffrohre 2 bilden die Kontakflächen 6 der Kunststoffrohre 2 im Kabelführungsrohrbündel 1. Die Kontaktflächen 6 der Kunststoffrohre liegen im Kabelführungsrohrbündel 1 flächig mit schmalen Kontaktspalten aneinander und bilden einen bis auf die Kontaktspalte massiven Rohrbündelkern. Man entnimmt aus den Fig. 2, 3 und 5, daß die Verbindungsstege 3 im Kabelführungsrohrbündel 1 als Abdichtungslamellen funktionieren, welche die Kontaktspalte und daran nach außen anschließende Verformungsfreiräume 7 überspannen. Der Ausdruck Verformungsfreiräume 7 macht deutlich, daß diese Freiräume vorteilhaft sind, wenn es sich um das bogenförmige Verlegen eines Kabelführungsrohrbündels 1 handelt. Sie sind aber auch vorteilhaft, wenn ein Rohraggregat 4 zu einem Kabelführungsrohrbündel zusammengelegt wird.

Bei allen dargestellten Ausführungsformen besitzen die Kunststoffrohre 2 einen runden Innenquerschnitt. Bei der Ausführungsform nach den Fig. 1 und 2 besitzen die Kunststoffrohre 2 einen Außenquerschnitt 5, der vollständig einem regelmäßigen Sechseck angehört. Bei der Ausführungsform nach den Fig. 3, 4 und 5 ist die Ausbildung so getroffen, daß die Kunststoffrohre 2 einen Außenquerschnitt 5 besitzen, bei dem an die dem sechseckigen Querschnitt angehörenden, Kontaktflächen 6 bildenden Außenquerschnittsteile ein Bereich 8 mit kreisbogenförmigem Außenquerschnitt mittelbar oder unmittelbar anschließt. Bei der Ausführungsform nach Fig. 3 schließt der Bereich 8 mit kreisbogenförmigem Außenquerschnitt an Ecken 9 der einem regelmäßigen Sechseck angehörenden Außenquerschnittsteile unmittelbar an. Bei der Ausführungsform nach den Fig. 4 und 5 ist der Bereich 8 mit kreisbogenförmigem Außenquerschnitt halbkreisförmig ausgeführt und an Außenquerschnittsbereiche 10 angeschlossen, die einem halben regelmäßigen Sechseck angehören.

Die Verbindungsstege 3 der Kunststoffrohre 2 sind mit Abstand von den Ecken 9 des einem regelmäßigen Sechseck angehörenden Außenquerschnitts 5 an die Außenoberfläche der Kunststoffrohre 2 angeschlossen. Insoweit wird auf die Fig. 1 und 2 verwiesen. Aus den Fig. 4 und 5 entnimmt man, daß die Verbindungsstege 3 in dem Außenquerschnittsteil an die Außenoberfläche der Kunststoffrohe 2 angeformt sind, indem der Bereich 8 mit halbkreisförmigem Außenquerschnittsteil an die Außenquerschnittsbereiche 10 angeschlossen ist, die einem halben regelmäßigen Sechseck angehören.

Die Fig. 2 macht deutlich, daß bei einer strammen Umreifung des Kunststoffrohrbündels 1 auf besondere Abdeckmaßnahmen in dem von Verbindungsstegen 3 freien Bereich des Kunststoffrohrbündels 1 verzichtet werden kann. Bei der Ausführungsform nach Fig. 3 ist der von Verbindungsstegen 3 und damit Abdichtungslamellen freie Bereich zwischen den Kunststoffrohren 2 durch eine Abdeckungslamelle 11 aus Kunststoff abgedeckt, die nachträglich aufgeschweißt ist. Die Fig. 4 und 5 zeigen die bevorzugte Ausführungsform, bei der die Abdeckungslamelle 11 einseitig entsprechend einem Verbindungssteg an eines der Kunststoffrohre 2 angeformt und mit dem gegenüberliegenden Kunststoffrohr 2 nachträglich verschweißt ist. Die Verschweißung mag eine Punkt- oder Linienverschweißung 12 sein. Bei der Herstellung wurde die angeformte Abdeckungslamelle 11 mit einem stabilisierenden Randsteg 13 als Extrusions- und Verschweißungshilfe versehen. Dieser ist im Ausführungsbeispiel mit rundem Querschnitt ausgerüstet, was in extrusionstechnischer Hinsicht und beim Kalibrieren Vorteile hat. Der überstehende Randteil 14 der Abdeckungslamelle 11 und der stabilisierende Randsteg 13 können nach dem Verschweißen entfernt werden. Der Randsteg 13 kann auch als Röhrchen ausgeführt sein.

## Patentansprüche

1. Kabelführungsrohrbündel aus gleichen Kunststoffrohren, die mit Hilfe von angeformten und verformbaren längslaufenden Verbindungsstegen vereinigt, zu einem ebenen Rohraggregat entbündelbar sind, mit der Kombination der folgenden Merkmale:
a) das Kabelführungsrohrbündel (1) besteht aus drei Kunststoffrohren (2),
b) die Kunststoffrohre (2) besitzen einen Außenquerschnitt (5), der zumindest bereichsweise einem regelmäßigen Sechseck angehört,
c) die in bezug auf den Außenquerschnitt (5) dem regelmäßigen Sechseck angehörende Außenflächen der Kunststoffrohre (2) bilden die Kontaktflächen (6) der Kunststoffrohre (2) im Kabelführungsrohrbündel (1),
d) die Kontaktflächen (6) der Kunststoffrohre liegen im Kabelführungsrohrbündel (1) flächig mit schmalen Kontaktspalten aneinander und bilden einen bis auf die Kontaktspalte massiven Rohrbündelkern,
e) die Verbindungsstege (3) sind im Kabelführungsrohrbündel (1) Abdichtungslamellen, welche die Kontaktspalte und daran nach außen anschließende Verformungsfreiräume (7) überspannen.

2. Kabelführungsrohrbündel nach Anspruch 1, dadurch gekennzeichnet, daß die Kunststoffrohre (2) einen runden Innenquerschnitt aufweisen.

3. Kabelführungsrohrbündel nach einem der Ansprüche 1 oder 2, dadurch gekennzeichnet, daß die Kunststoffrohre (2) einen Außenquerschnitt besitzen, der vollständig einem regelmäßigen Sechseck angehört.

4. Kabelführungsrohrbündel nach einem der Ansprüche 1 oder 2, dadurch gekennzeichnet, daß die Kunststoffrohre (2) einen Außenquerschnitt besitzen, bei dem an die dem sechseckigen Querschnitt angehörenden, Kontaktflächen (6) bildenden Außenquerschnittsteile ein Bereich (8) mit kreisbogenförmigem Außenquerschnitt mittelbar oder unmittelbar anschließt.

5. Kabelführungsrohrbündel nach Anspruch 4, dadurch gekennzeichnet, daß der Bereich (8) mit kreisbogenförmigem Außenquerschnitt an Ecken (9) der einem regelmäßigen Sechseck angehörenden Außenquerschnittsteile unmittelbar anschließt.

6. Kabelführungsrohrbündel nach Anspruch 4, dadurch gekennzeichnet, daß der Bereich (8) mit kreisbogenförmigem Außenquerschnitt halbkreisförmig ausgeführt und an Außenquerschnittsbereiche (10) angeschlossen ist, die ein halbes regelmäßiges Sechseck bilden.

7. Kabelführungsrohrbündel nach einem der Ansprüche 1 bis 6, dadurch gekennzeichnet, daß die Verbindungsstege (3) der Kunststoffrohre (2) mit Abstand von den Ecken (9) des einem regelmäßigen Sechseck angehörenden Außenquerschnittsteils (5) an die Außenoberfläche der Kunststoffrohre (2) angeformt sind.

8. Kabelführungsrohrbündel nach den Ansprüchen 6 und 7, dadurch gekennzeichnet, daß die Verbindungsstege (3) in dem Außenquerschnittsteil an die Außenoberflächen der Kunststoffrohre (2) angeformt sind, indem der Bereich (8) mit halbkreisbogenförmigem Außenquerschnittsteil an die Außenquerschnittsbereiche (10) angeschlossen ist, die einem halben regelmäßigen Sechseck angehören.

9. Kabelführungsrohrbündel nach einem der Ansprüche 1 bis 8, dadurch gekennzeichnet, daß der von Verbindungsstegen (3) freie Bereich zwischen den Kunststoffrohren (2) durch eine Abdeckungslamelle (11) aus Kunststoff abgedeckt ist.

10. Kabelführungsrohrbündel nach Anspruch 9, dadurch gekennzeichnet, daß die Abdeckungslamelle (11) einseitig entsprechend einem Verbindungssteg an eines der Kunststoffrohre (2) angeformt und mit dem gegenüberliegenden Kunststoffrohr (2) nachträglich verschweißt ist.

11. Verfahren zur Herstellung eines Rohraggregates für ein Kabelführungsrohrbündel nach einem der Ansprüche 1 bis 10, wobei im Wege des Extrudierens zunächst das Rohraggregat mit den Verbindungsstegen geformt und aus der Extrusionswärme heraus in einem Kalibrierwerkzeug die Außenflächen des Querschnitts kalibriert sowie dabei die späteren Kontaktflächen unter Berücksichtigung der Abkühlungsschrumpfung als Paßflächen für das Kabelführungsrohrbündel dimensioniert werden.

12. Verfahren nach Anspruch 11, wobei an eines der im Rohraggregat außenliegenden Kunststoffrohre beim Extrudieren auch die Abdecklamelle angeformt wird.

13. Verfahren nach Anspruch 12, wobei eine Abdeckungslamelle angeformt wird, die breiter ist als die Verbindungsstege und über die später anzubringende Schweißnaht vorsteht.

14. Verfahren nach einem der Ansprüche 12 oder 13, wobei die Abdeckungslamelle dicker ausgeführt wird als die Abstandsstege.

15. Verfahren nach einem der Ansprüche 12 bis 14, wobei die Abdeckungslamelle mit einem stabilisierenden Randsteg als Extrusions- und Verschweißhilfe versehen wird.

## Claims

1. A cable conduit bundle comprising identical plastic tubes which are combined with the aid of integrally formed, deformable, longitudinally extending connecting webs, which can be unbundled to form a flat tube unit, with the combination of the following features:
a) the cable conduit bundle (1) consists of three plastic tubes (2),
b) the plastic tubes (2) have an external cross-section (5) which forms part, at least regionally, of a regular hexagon,
c) the external surfaces of the plastic tubes (2) forming part of the regular hexagon with respect to the external cross-section (5) form the contact faces (6) of the plastic tubes (2) in the cable conduit bundle (1),
d) the contact faces (6) of the plastic tubes are seated flat against each other with narrow contact gaps in the cable conduit bundle (1) and form a tube bundle core which is solid except for the contact gaps,
e) the connecting webs (3) are sealing strips in the cable conduit bundle (1), which span the contact gaps and the free deformation spaces (7) outwardly adjoining the latter.

2. A cable conduit bundle according to claim 1, characterised in that the plastic tubes (2) have a round internal cross-section.

3. A cable conduit bundle according to either one of claims 1 or 2, characterised in that the plastic tubes (2) have an external cross-section which belongs entirely to a regular hexagon.

4. A cable conduit bundle according to either one of claims 1 or 2, characterised in that the plastic tubes (2) have an external cross-section in which a region (8) with a circularly arcuate external cross-section directly or indirectly adjoins the external cross-sectional parts forming contact faces (6) and belonging to the hexagonal cross-section.

5. A cable conduit bundle according to claim 4, characterised in that the region (8) with the circularly arcuate external cross-section directly adjoins corners (9) of the external cross-sectional parts belonging to a regular hexagon.

6. A cable conduit bundle according to claim 4, characterised in that the region (8) with the circularly arcuate external cross-section is of semicircular construction and adjoins external cross-section regions (10) which form half a regular hexagon.

7. A cable conduit bundle according to any one of claims 1 to 6, characterised in that the connecting webs (3) of the plastic tubes (2) are integrally formed on the external surface of the plastic tubes (2) at a distance from the corners (9) of the external cross-sectional part (5) belonging to a regular hexagon.

8. A cable conduit bundle according to claims 6 and 7, characterised in that the connecting webs (3) are integrally formed on the external surfaces of the plastic tubes (2) in the external cross-sectional part, in that the region (8) with the semicircular external cross-sectional part is attached to the external cross-section regions (10) which belong to half a regular hexagon.

9. A cable conduit bundle according to any one of claims 1 to 8, characterised in that the region between the plastic tubes (2) which is free from connecting webs (3) is covered by a cover sheet (11) made of plastic.

10. A cable conduit bundle according to claim 9, characterised in that the cover sheet (11) is integrally formed on one of the plastic tubes (2) on one side, corresponding to a connecting web, and is subsequently welded to the opposite plastic tube (2).

11. A process for manufacturing a tube unit for a cable conduit bundle according to any one of claims 1 to 10, wherein the tube unit with the connecting webs is first formed by an extrusion route and the external faces of the cross-section are sized in a sizing tool out of the extrusion heat, and wherein the subsequent contact faces are dimensioned as fitting surfaces for the cable conduit bundle taking into account the shrinkage on cooling.

12. A process according to claim 11, wherein the cover sheet is also integrally formed during extrusion on one of the plastic tubes situated externally in the tube unit.

13. A process according to claim 12, wherein a cover sheet is integrally formed which is wider than the connecting webs and which projects beyond the weld seam to be provided later.

14. A process according to either one of claims 12 or 13, wherein the cover sheet is of thicker construction than the connecting webs.

15. A process according to any one of claims 12 to 14, wherein the cover sheet is provided with a stabilising edge projection as an extrusion and welding aid.

## Revendications

1. Faisceau de tubes de câbles constitué de tubes identiques en matière synthétique, qui sont réunis à l'aide d'âmes de raccord, formées et déformables, s'étendant dans le sens de la longueur, et peuvent être séparés en un ensemble de tubes plats, associant les caractéristiques suivantes :
a) le faisceau de tubes de câbles (1) est constitué de trois tubes en matière synthétique (2).
b) les tubes en matière synthétique (2) présentent une section extérieure (5) qui appartient, au moins partiellement, à un hexagone régulier.
c) les surfaces extérieures des tubes en matière synthétique (2), appartenant à l'hexagone régulier, eu égard à la section extérieure (5), constituent les surfaces de contact (6) des tubes en matière synthétique (2) dans le faisceau de tubes de câbles (1).
d) les surfaces de contact (6) des tubes en matière synthétique sont placées côte à côte, en nappe, avec de fines fentes de contact, dans le faisceau de tubes de câbles (1), et forment un noyau de faisceau de tubes massif sauf aux fentes de contact.
e) les âmes de raccord (3) sont, dans le faisceau de tubes de câbles (1), des lamelles d'étanchéification, qui recouvrent les fentes de contact et les espaces libres de déformation (7) s'y rattachant à l'extérieur.

2. Faisceau de tubes de câbles selon la revendication 1, caractérisé en ce que les tubes en matière synthétique (2) présentent une section intérieure ronde.

3. Faisceau de tubes de câbles selon la revendication 1 ou 2, caractérisé en ce que les tubes en matière synthétique (2) présentent une section extérieure, qui appartient entièrement à un hexagone régulier.

4. Faisceau de tubes de câbles selon la revendication 1 ou 2, caractérisé en ce que les tubes en matière synthétique (2) présentent une section extérieure, au niveau de laquelle une zone (8), avec une section extérieure en arc de cercle, se rattache indirectement ou directement aux parties de la section extérieure appartenant à la section hexagonale et formant des surfaces de contact (6).

5. Faisceau de tubes de câbles selon la revendication 4, caractérisé en ce que la zone (8), avec la section extérieure en arc de cercle, se rattache directement aux angles (9) des parties de la section extérieure appartenant à un hexagone régulier.

6. Faisceau de tubes de câbles selon la revendication 4, caractérisé en ce que la zone (8), avec la section extérieure en arc de cercle, est conçue en demi-cercle, et est rattachée à des zones de la section extérieure (10), qui forment un demi hexagone régulier.

7. Faisceau de tubes de câbles selon l'une des revendications 1 à 6, caractérisé en ce que les âmes de raccord (3) des tubes en matière synthétique (2) sont formées à l'écart des angles (9) de la partie de la section extérieure (5) appartenant à un hexagone régulier, sur la surface extérieure des tubes en matière synthétique (2).

8. Faisceau de tubes de câbles selon les revendications 6 et 7, caractérisé en ce que les âmes de raccord (3) sont formées, dans la partie de la section extérieure, sur les surfaces extérieures des tubes en matière synthétique (2), la zone (8), comportant la partie de la section extérieure en demi-cercle, étant rattachée aux zones de la section extérieure (10), qui appartiennent à un demi-hexagone régulier.

9. Faisceau de tubes de câbles selon l'une des revendications 1 à 8, caractérisé en ce que la zone libre des âmes de raccord (3), entre les tubes en matière synthétique (2), est recouverte par une lamelle de recouvrement (11) en matière synthétique.

10. Faisceau de tubes de câbles selon la revendication 9, caractérisé en ce que la lamelle de recouvrement (11) est formée d'un côté conformément à une âme de raccord, sur l'un des tubes en matière synthétique (2), et est ensuite soudée avec le tube en matière synthétique (2) opposé.

11. Procédé pour la fabrication d'un ensemble de tubes pour un faisceau de tubes de câbles, selon l'une des revendications 1 à 10, l'ensemble de tubes étant d'abord formé avec les âmes de raccord, par voie d'extrusion, et les surfaces extérieures de la section étant calibrées, avec la chaleur d'extrusion, dans un outil de calibrage, et ce faisant, les surfaces de contact ultérieures étant dimensionnées, comme surfaces d'ajustage pour le faisceau de tubes de câbles, en tenant compte de la contraction lors du refroidissement.

12. Procédé selon la revendication 11, dans lequel la lamelle de recouvrement est également formée sur l'un des tubes en matière synthétique, situé à l'extérieur de l'ensemble de tubes, lors de l'extrusion.

13. Procédé selon la revendication 12, dans lequel est formée une lamelle de recouvrement, qui est plus large que les âmes de raccord et qui fait saillie sur la soudure devant être réalisée ultérieurement.

14. Procédé selon la revendication 12 ou 13, dans lequel la lamelle de recouvrement est conçue plus épaisse que les âmes d'écartement.

15. Procédé selon l'une des revendications 12 à 14, dans lequel la lamelle de recouvrement est pourvue d'une âme de bord stabilisatrice, comme aide à l'extrusion et au soudage.
